**Europäisches Patentamt**

**European Patent Office**

**Office européen des brevets**

(19)

(11) Publication number : **0 294 866 B1**

# EUROPEAN PATENT SPECIFICATION

(12)

(45) Date of publication of patent specification :
**12.02.92 Bulletin 92/07**

(51) Int. Cl.⁵ : **B62K 25/00**

(21) Application number : **88201015.0**

(22) Date of filing : **19.05.88**

(54) **Front wheel suspension system for motorcycles.**

(30) Priority : **12.06.87 NL 8701364**

(43) Date of publication of application :
**14.12.88 Bulletin 88/50**

(45) Publication of the grant of the patent :
**12.02.92 Bulletin 92/07**

(84) Designated Contracting States :
**DE FR GB IT NL**

(56) References cited :
**EP-A- 0 211 638**
**FR-A- 2 380 181**
**FR-A- 2 418 141**

(73) Proprietor : **Peters, Willem**
**Bonenkampstraat 8**
**NL-6551 ZE Weert (NL)**

(72) Inventor : **Verkuylen, Adrianus Henricus**
**Ignatius**
**Kastanjelaan 30**
**NL-6581 PX Malden (NL)**

(74) Representative : **Timmers, Cornelis Herman**
**Johannes et al**
**EXTERPATENT B.V. P.O. Box 90649**
**NL-2509 LP 's-Gravenhage (NL)**

## Description

The invention relates to a front wheel suspension system for motorcycles comprising elements which are spring-mounted with respect to one another, one of said elements being a single support arm extending along only one side of the front wheel and being coupled through co-operating guide means with an element being rotatably mounted on the front wheel shaft, said support arm being connected to the ball-head of the motorcycle and shock damper means being provided between the support arm and the front wheel shaft

A front wheel suspension system of this type is known from the document FR-A-2 380 181. In that known system the element (3) being rotatably mounted on the front wheel shaft (2) is executed as a forklike element. The guide means coupling the support arm (5) with the forklike element (3) has the form of a pivot connection (4, X). The support arm is bended in a plane parallel to the front wheel in such a manner that the bended portion of the support arm will extend in front of the front wheel shaft (2).

The axis y-y of the upper part of the support arm is offset with respect to the imaginary line extending at a right angle through the front wheel shaft axis and being parallel to the said axis y-y. During the suspension travel or spring movements of the front wheel said offset is changing between minimal and maximal values corresponding with respectively the fully extended and fully compressed conditions of the shock damper means. That changement of the offset values occurring during the said suspension travel of the front wheel will result in a substantial changement of the socalled "trail" of the front wheel, said trail being defined as the horizontal distance - measured on the horizontal path - between the points in which the axis y-y of the support arm resp. the line extending through the front wheel shaft axis and being normal to the said horizontal path intersect the said horizontal path.

As the said trail will be the most important factor as to the steering geometry and provides for the exact relation between the stability in forward direction and the manoeuvrability of the vehicle the important changement of the follower distance occuring with the known front wheel suspension system will entail consequently great disadvantages.

The object of the present invention is to obviate the disadvantages of telescoping forth type front suspensions. To this end the present invention provides for a front wheel suspension system for motorcyles comprising elements which are spring-mounted with respect to one another, one of said elements being a support arm extending along only one side of the front wheel and being coupled through co-operating guide means with an element being rotatably mounted on the front wheel shaft, said support arm being connected to the ball-head of the motorcycle and shock damper means being provided between the support arm and the front wheel shaft, characterised in that the said guide means are constituted by substantially straight guide ways which are provided on both the support arm and the element-herein referred to as shift piece - being rotatably mounted on the front wheel shaft, and in that the shock damper means is connected on the one side to the front wheel through the shift piece and on the other side to the support arm

By these measures of the present invention a front wheel suspension system is obtained in which the offset of the suspension system does not change at all and the trail but little during the suspension travel or spring movements of the front wheel with the advantageous result that an optimal steering geometry as well as an optimal relation between the stability in forward direction and manoeuvrability are obtained.

In a preferred embodiment of the front wheel suspension system according to the present invention the shift piece is provided with a groovelike chamber opening at the side opposed to the front wheel shaft, in which chamber a pair of guide ways are formed being symmetrical to the front wheel shaft, said guide ways cooperating with a pair of guide ways being formed on the outside of the support arm, in which the guide ways of both the support arm and the shift piece are substantially V-shaped in cross-section. Preferably the guide ways of both the support arm and the shift piece are coated with a wear resistent material which offers the possibility to manufacture the support arm and the shift piece from a light weight material, such as aluminium, in which e.g. hardened steel as the wear resistent material can be chosen. Preferably needle bearings are provided between the guide ways of both the support arm and the shift piece or between the wear resistent coating materials of such guide ways. In a preferred embodiment the shift piece is fixed on the shaft of the front wheel by the intermediary of a wheel bearing.

In a preferred embodiment of the present invention the support arm is provided with a chamber being substantially symmetrical with respect to the shaft of the front wheel and opening on the side opposed to the front wheel shaft, in which the shock-damper means are placed substantially in the chamber of the support arm, the axes of the front wheel shaft and of the shock-damper means respectively being substantially perpendicular to each other.

By way of example a preferred embodiment of the front wheel suspension system according to the present invention is explained further with reference to the accompanying drawings, in which :

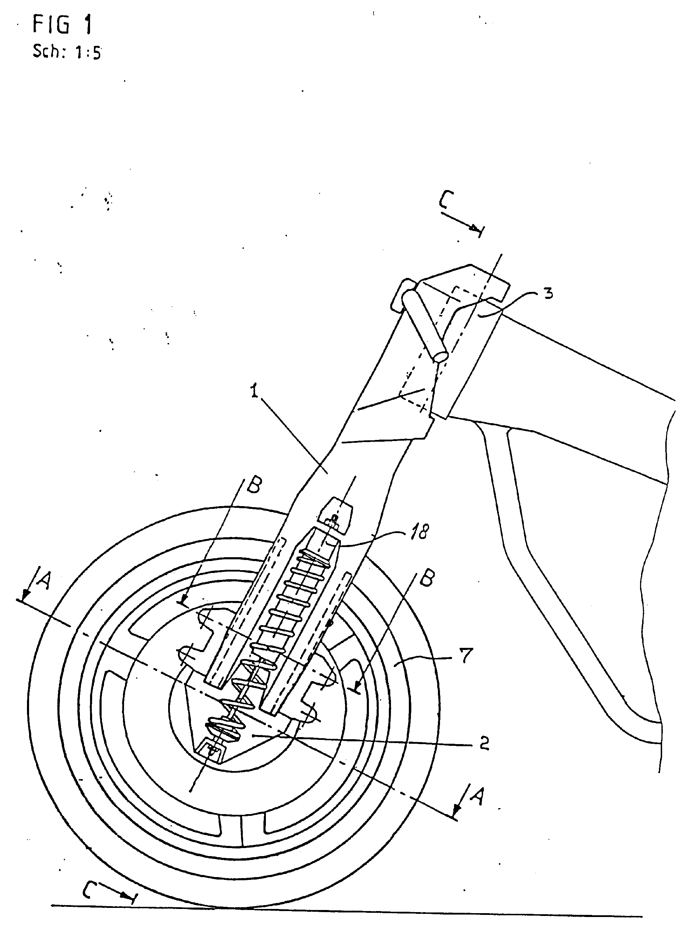

Fig.1 is a side view of the front wheel of a motorcycle having a suspension system according to the invention,

Fig.2 is a front view of the front wheel and suspension system according to line C-C in Figure 1,

Fig.3 is a cross-sectional view according to line A-A in Figure 1, and

Fig.4 shows on an enlarged scale a cross-section of the front wheel suspension according to line B-B in Figure 1.

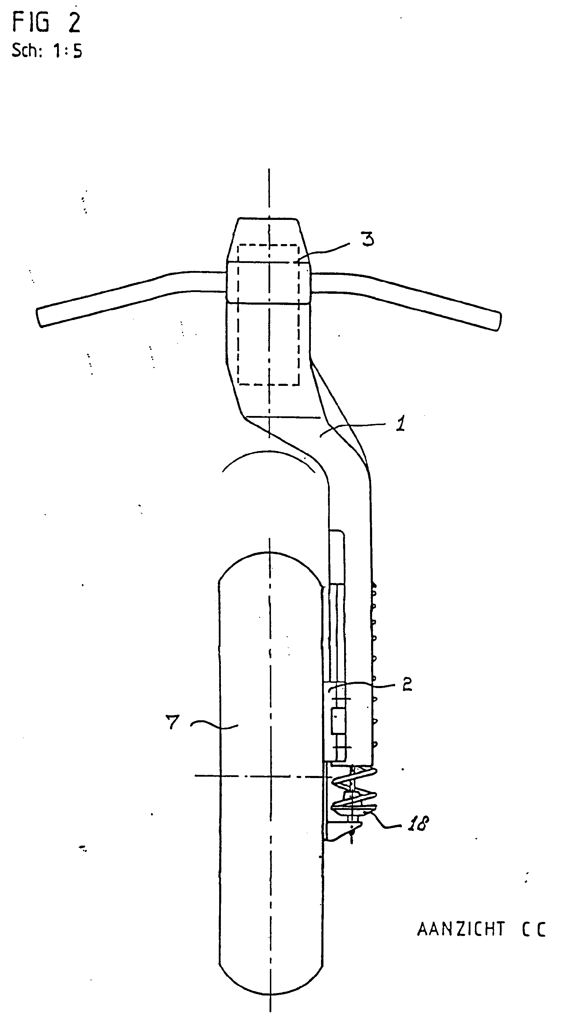

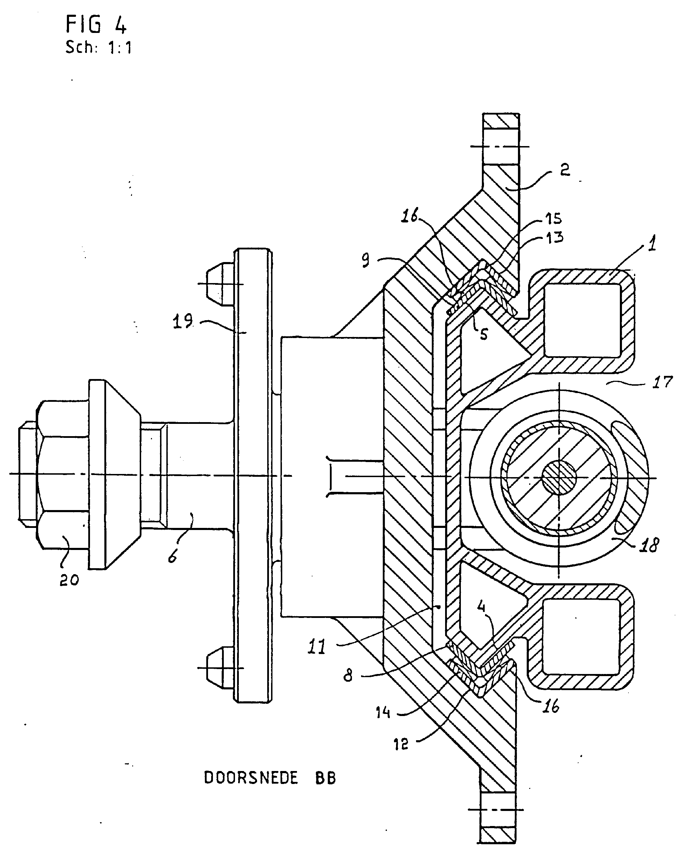

As shown in the drawings the front wheel suspension system according to the present invention comprises essentially a pair of elements being spring-mounted with respect to each other and consisting of one single support arm 1 and a shift piece 2. The support arm 1 is connected to the ball-head 3 of the motorcycle and has a bended configuration (see front view of fig.2) such that said support arm extends along one side of the front wheel 7. The support arm 1 is provided with guide means which in the example of the embodiment shown in the figures are formed as a pair of substantially straight guide ways 4,5 on the outside of the arm said guide ways being substantially V-shaped in cross-section (see Fig.4) and extending substantially symmetrically with respect to the shaft 6 of the front wheel 7 and being coated with a wear resistent material 8,9. Through the intermediary of a wheel bearing 10 the shift piece 2 is rotably mounted on the shaft 6 of the front wheel 7. The shift piece 2 is also provided with guide means which cooperate with the guide means of the support arm 1. In the example of the embodiment shown in the figures the shift piece 2 is provided with a groovelike chamber 11 opening at the side opposed to the front wheel shaft 6 in which chamber a pair of substantially straight guide ways 12,13 are formed. Said guide ways 12,13 are substantially V-shaped in cross-section and are symmetrical to the front wheel shaft and are also coated with a wear resistent material 14,15. Coating the guide ways with a wear resistent material offers the possibility to manufacture both the support arm and the shift piece from a light weight material, such as aluminium, while as the resistent material e.g. hardened steel can be used. Needle bearings 16 are inserted between the wear resistent materials of the guide ways 4,12 and 5,13 of the support arm and the shift piece respectively.

The support arm 1 comprises a chamber 17 which is substantially symmetrical with respect to the front wheel shaft and opens at the side opposed to said front wheel shaft. A shock damper 18 being constructed in a manner known per se is placed in said chamber 17 and is connected to the support arm 1 on the one side and to the shift piece 2 on the other side. The shock damper 18 is arranged in such a way that the axes of the shock damper 18 and the shaft 6 of the front wheel 7 are perpendicular to each other.

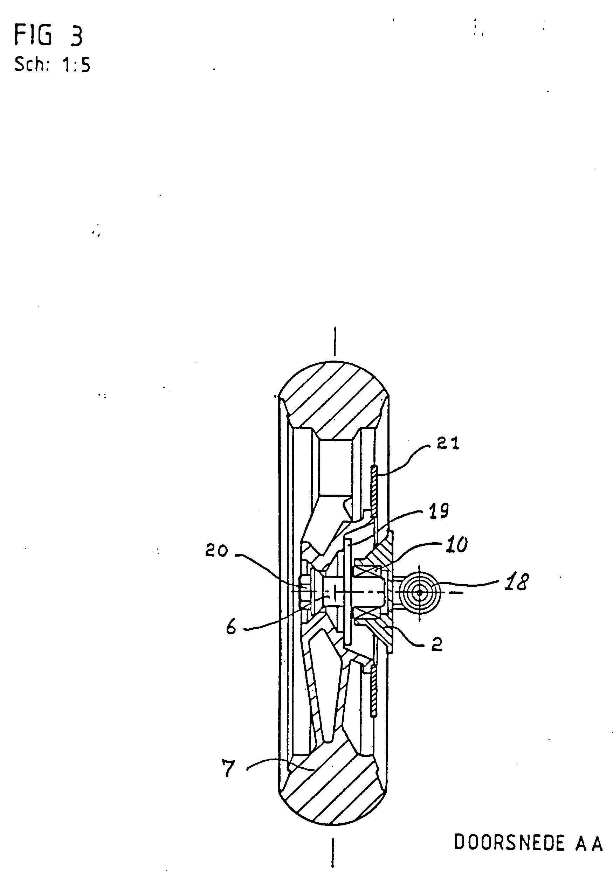

As appears especially from Fig. 3 the front wheel shaft 6 is provided with a hub 19 that is an integral part of the shaft and against which hub the front wheel is mounted on the shaft 6 by means of a wheel nut 20. Finally a usual disc brake 21 is present the constructive details of which are not shown further herein.

## Claims

1. Front wheel suspension system for motorcycles comprising elements which are spring-mounted with respect to one another, one of said elements being a single support arm extending along only one side of the front wheel and being coupled through co-operating guide means with an element being rotatably mounted on the front wheel shaft, said support arm being connected to the ball-head of the motorcycle and shock damper means being provided between the support arm and the front wheel shaft, characterised in that the said guide means are constituted by substantially straight guide ways (4, 5; 12, 13) which are provided on both the support arm (1) and the element (2) - herein referred to as shift piece- which rotatably supports the front wheel (7), and in that the shock damper means (18) is connected on the one side to the front wheel (7) through the shift piece (2) and on the other side to the support arm (1).

2. Front wheel suspension system according to claim 1, characterised in that the shift piece (2) is provided with a groovelike chamber (11) opening at the side opposed to the front wheel shaft (6), in which chamber (11) a pair of guide ways (12,13) are formed being symmetrical to the front wheel shaft (6), said guide ways (12,13) cooperating with a pair of guide ways (4,5) being formed on the outside of the support arm (1).

3. Front wheel suspension system according to claim 1 or 2, characterised in that the guide ways (4,5;12,13) of both the support arm (1) and the shift piece (2) are substantially V-shaped in cross-section.

4. Front wheel suspension system according to one or more of the claims 1 to 3, characterised in that the guide ways (4,5;12,13) of both the support arm (1) and the shift piece (2) are coated with a wear resistent material (14,15).

5. Front wheel suspension system according to one or more of the claims 1 to 4, characterised in that needle bearings (16) are provided between the guide ways (4,5;12,13) of both the support arm (1) and the shift piece (2) or between the wear resistent coating material (14,15) of such guide ways.

6. Front wheel suspension system according to one of more of the claims 1 to 5, characterised in that the shift piece (2) is fixed on the shaft (6) of the front wheel (7) by the intermediary of a wheel bearing.

7. Front wheel suspension system according to one or more of the claims 1 to 6, characterised in that the support arm (1) is provided with a chamber (17) being substantially symmetrical with respect to the shaft (6) of the front wheel (7) and opening on the side opposed to the front wheel shaft (6), in which the shock damper means (18) are placed substantially in the chamber (17) of the support arm (1), the axes of the shaft (6) of the front wheel (7) and of the shock damper means (18) respectively being substantially perpendicular to each other.

**Patentansprüche**

1. Vorderradaufhängungssystem für Motorräder mit Bauteilen, welche relativ zueinander federnd befestigt sind, wobei eines dieser Bauteile die Gestalt eines einzigen Tragarmes hat, der sich längs nur einer Seite des Vorderrades erstreckt und über zusammenwirkende Führungsmittel mit einem Bauteil gekuppelt ist, das drehbar an der Vorderradachse befestigt ist, und wobei der genannte Tragarm mit dem Steuerkopf des Motorrades verbunden ist und Stoßdämpfermittel zwischen dem Tragarm und der Vorderradachse vorgesehen sind, dadurch gekennzeichnet, daß die genannten Führungsmittel durch im wesentlichen gerade Führungsbahnen (4,5; 12,13) gebildet sind, welche sowohl an dem Tragarm (1) als auch an dem hier als Schiebestück bezeichneten Bauteil (2) vorgesehen sind, welchletzteres das Vorderrad (7) drehbar abstützt und daß die Stoßdämpfermittel (18) einerseits über das Schiebestück (2) mit dem Vorderrad (7) und andererseits mit dem Tragarm (1) verbunden sind.

2. Vorderradaufhängungssystem nach Anspruch 1, dadurch gekennzeinet, daß das Schiebestück (2) mit einer rinnenartigen Kammer (11) versehen ist, die sich auf der von der Vorderradachse (6) abliegenden Seite öffnet und in der ein Paar von Führungsbahnen (12,13) ausgebildet ist, das symmetrisch zu der Vorderradachse (6) gelegen ist, wobei diese Führungsbahnen ( 12,13) mit einem Paar von Führungsbahnen (4,5) zusammen wirken, die an der Außenseite des Tragarms (1) angeformt sind.

3. Vorderradaufhängungssystem nach Anspruch 1 oder 2, dadurch gekennzeichnet, daß die Führungsbahnen (4,5; 12,13) sowohl des Tragarms (1) als auch des Schiebestückes (2) im Querschnitt im wesentlichen V-förmig sind.

4. Vorderradaufhängungssystem nach einem oder mehreren der Ansprüche 1 bis 3, dadurch gekennzeichnet, daß die Führungsbahnen (4,5; 12,13) sowohl des Tragarms (1) als auch des Schiebestückes (2) mit einem verschleißfesten Material (14, 15) beschichtet sind.

5. Vorderradaufhängungssystem nach einem oder mehrern der Ansprüche 1 bis 4, dadurch gekennzeichent, daß Nadellager (16) zwischen den Führungsbahnen (4,5; 12,13) sowohl des Tragarms (1) als auch des Schiebestückes (2) oder zwischen der verschleißfesten Materialbeschichtung (14,15) dieser Führungsbahnen vorgesehen sind.

6. Vorderradaufhängungssystem nach einem oder mehreren der Ansprüche 1 bis 5, dadurch gekennzeichnet, daß das Schiebestück (2) an der Achse (6) des Vorderrades (7) unter Zwischenschaltung eines Radlagers befestigt ist.

7. Vorderradaufhängungssystem nach einem oder mehreren Ansprüche 1 bis 6, dadurch gekennzeichnet, daß der Tragarm (1) mit einer Kammer (17) versehen ist, welche im wesentlichen symmetrisch zu der Achse (6) des Vorderrades (7) gelegen ist und sich auf der von der Vorderradachse (6) abliegenden Seite öffnet, wobei die Stoßdämpfermittel (18) im wesentlichen in der Kammer (17) des Tragarms (1) untergebracht sind und die geometrischen Achsen der Vorderradachse (6) und der Stoßdämpfermittel (18) im wesentlichen senkrecht aufeinander stehen.

**Revendications**

1. Système de suspension de roue avant pour des motocycles, comportant des éléments montés élastiquement les uns par rapport aux autres, l'un desdits éléments consistant en un bras de support unique qui s'étend le long d'un seul côté de la roue avant et qui est accouplé par l'intermédiaire de moyens de guidage coopérants avec un élément monté à rotation sur l'arbre de roue avant, ledit bras de support étant relié au corps de rotule du motocycle, tandis qu'il est prévu des moyens amortisseurs de chocs entre le bras de support et l'arbre de roue avant, caractérisé en ce que lesdits moyens de guidage sont constitués par des pistes de guidage sensiblement rectilignes (4, 5; 12, 13) prévues à la fois sur le bras de support (1) et sur l'élément (2) - appelé ici pièce de déplacement - qui supporte à rotation la roue avant (7), et en ce que les moyens amortisseurs de chocs (18) sont accouplés, d'un côté, avec la roue avant (7) par l'intermédiaire de la pièce de déplacement (2) et, de l'autre côté, avec le bras de support (1).

2. Système de suspension de roue avant selon la revendication 1, caractérisé en ce que la pièce de déplacement (2) est pourvue d'une chambre (11) semblable à une gorge, qui s'ouvre du côté opposé à l'arbre de roue avant (6), chambre (11) dans laquelle sont définies deux pistes de guidage (12, 13) symétriques par rapport à l'arbre de roue avant (6), lesdits pistes de guidage (12, 13) coopérant avec deux pistes de guidage (4, 5) définies sur la face extérieure du bras de support (1).

3. Système de suspension de roue avant selon la revendication 1 ou 2, caractérisé en ce que les pistes de guidage (4, 5; 12, 13) aussi bien du bras de support (1) que de la pièce de déplacement (2) ont une configuration sensiblement en forme de V en section transversale.

4. Système de suspension de roue avant selon l'une au moins des revendications 1 à 3, caractérisé en ce que les pistes de guidage (4, 5; 12, 13) aussi bien du bras de support (1) que de la pièce de déplacement (2) sont revêtues d'un matériau (14, 15) résistant à une usure.

5. Système de suspension de roue avant selon l'une au moins des revendications 1 à 4, caractérisé en ce qu'il est prévu des roulements à aiguilles (16) entre les pistes de guidage (4, 5; 12, 13) aussi bien du bras de support (1) que de la pièce de déplacement (2) ou entre les matériaux de revêtement (14, 15) résistant à une usure de ces pistes de guidage.

6. Système de suspension de roue avant selon l'une au moins des revendications 1 à 5, caractérisé en ce que la pièce de déplacement (2) est fixée sur l'arbre (6) de la roue avant (7) par l'intermédiaire d'un roulement de roue.

7. Système de suspension de roue avant selon l'une au moins des revendications 1 à 6, caractérisé en ce que le bras de support (1) est pourvu d'une chambre (17) sensiblement symétrique par rapport à l'arbre (6) de la roue avant (7) et s'ouvrant sur le côté opposé à l'arbre de roue avant (6), les moyens amortisseurs de chocs (18) étant placés sensiblement dans la chambre (17) du bras de support (1), et les axes de l'arbre (6) de la roue avant (7) et des moyens amortisseurs de chocs (18) étant respectivement sensiblement perpendiculaires l'un par rapport à l'autre.

FIG 1
Sch: 1:5

FIG 2
Sch: 1:5

3

1

2

7

18

AANZICHT C C

7

FIG 3
Sch: 1:5

21

19

10

20

18

6

2

7

DOORSNEDE A A

# FIG 4
Sch: 1:1

DOORSNEDE BB